# EUROPÄISCHE PATENTSCHRIFT

(11) **EP 2 009 306 B1**
(45) Veröffentlichungstag und Bekanntmachung des Hinweises auf die Patenterteilung: **26.10.2011**
(21) Anmeldenummer: 08010676.8
(22) Anmeldetag: 12.06.2008
(51) Int. Cl.: F16D 13/75

(54) **Kupplungsaggregat**
Clutch device
Ensemble embrayage

(30) Priorität: 28.06.2007 DE 102007029936
(43) Veröffentlichungstag der Anmeldung: 31.12.2008
(73) Patentinhaber: Schaeffler Technologies GmbH & Co. KG, 91074 Herzogenaurach (DE)
(72) Erfinder: Krebs, Florian, 76530 Baden-Baden (DE); Hoppe, Marcus, 77855 Achern (DE)

(56) Entgegenhaltungen:
- EP-A1- 0 849 483
- DE-C1- 19 649 130
- FR-A1- 2 769 058

## Beschreibung

Die Erfindung betrifft ein Kupplungsaggregat mit wenigstens einer Reibungskupplung, bestehend aus wenigstens einer Antriebsplatte, die drehfest, jedoch axial begrenzt verlagerbar mit einem Gehäuse verbunden ist, wobei das Gehäuse mit einer Gegendruckscheibe verbindbar ist und zwischen Gehäuse und Anpressplatte in ringförmiger Anordnung vorgesehene Hebelelemente angeordnet sind. Die Hebelelemente sind dabei an einer vom Gehäuse getragenen Abwälzauflage verschwenkbar abgestützt, wobei zwischen den Hebelelementen und dem Gehäuse oder zwischen den Hebelelementen und der Anpressplatte eine automatische Nachstelleinrichtung wirksam ist, die zumindest eine partielle Kompensation der wenigstens an den Reibbelägen einer zwischen der Anpressplatte und der Gegendruckscheibe einspannbaren Kupplungsscheibe bewirkt, wobei in dem Kupplungsaggregat Transportsicherungsmittel integriert sind, die eine Blockierung der Nachstelleinrichtung bewirken und die zumindest beim erstmaligen Betätigen der Reibungskupplung, die im in einem Fahrzeug eingebauten Zustand selbsttätig eine Lage einnehmen, die die Nachstellfunktion der Nachstelleinrichtung freigibt. Solche Transportsicherungsmittel sind grundsätzlich in der lediglich ältem Anmeldung DE 10 2006 054 624 vorgeschlagen worden.

Ein Kupplungsaggregat mit wenigstens einer Reibungskupplung ist aus FR 276 90 58, das als nächstliegender Stand der Technik angesehen wird, offenbart.

Der vorliegenden Erfindung lage die Aufgabe zugrunde, Kupplungsaggregate der vorbeschriebenen Art dahingehend weiterzubilden, dass die Transportsicherungsmittel in einfacher und kostengünstiger Weise herstellbar und in das Kupplungsaggregat integrierbar sind.

Erfindungsgemäß wird dies bei einem gattungsgemäßen Kupplungsaggregat dadurch erzielt, dass die Transportsicherungsmittel durch wenigstens ein ringförmiges, axial federnde Element gebildet sind, welches funktionsmäßig zwischen dem Gehäuse und den Hebelelementen wirksam ist und zur Gewährleistung der Sicherungsfunktion für die automatische Nachstelleinrichtung in einen elastisch verspannten Zustand bringbar ist, der gewährleistet, dass die Hebelelemente in einer vorbestimmten verschwenkten Position zumindest innerhalb des nicht montierten Kupplungsaggregates gehalten werden. In dieser Position sind die Hebelelemente, welche als federndes Bauteil zusammen gefasst sein können, in einer axial verspannten Lage gehalten. Diese axial verspannte Lage der Hebelelemente entspricht vorzugsweise einer teilweise geschlossenen Position der entsprechenden Kupplung. Durch Verwendung eines ringförmigen axial federnden Elementes kann dieses durch einfache axiale Verformung in den entsprechenden axial elastisch verspannten Zustand gebracht werden. Hierfür kann ein Werkzeug Verwendung finden, das zumindest einen axialen Fortsatz, vorzugsweise mehrere derartige Fortsätze, aufweist, mittels derer das ringförmige Element elastisch verformt bzw. axial verspannt werden kann.

Das ringförmige Element kann in vorteilhafter Weise durch ein tellerfederartiges Bauteil gebildet sein. Ein derartiges Element kann dabei einerseits axial am Gehäuse und andererseits an zumindest einzelnen der Hebelelemente abgestützt sein. Zweckmäßig kann es sein, wenn das ringförmige Element gegenüber dem Gehäuse mittelbar oder unmittelbar umfangsmäßig positioniert ist. Hierfür kann das ringförmige Element am Außenrand radiale Ausleger angeformt haben, die zur Drehsicherung des Elementes mit am Gehäuse vorgesehenen bzw. vom Gehäuse gebildeten Verdrehsicherungskonturen zusammen wirken.

Weitere sowohl funktionelle als auch konstruktive Vorteile werden in Zusammenhang mit der folgenden Figurenbeschreibung näher erläutert.

Dabei zeigen:
- Figur 1: einen Halbschnitt durch ein Kupplungsaggregat mit zumindest einer erfindungs- gemäß ausgestalteten Reibungskupplung und verriegeltem Transportsicherungs mittel,
- Figur 2: eine der Figur 1 entsprechende Darstellung, jedoch mit entriegeltem Transport- sicherungsmittel, wobei die Bauteile in ihrer einem geöffneten Zustand der Rei- bungskupplungen entsprechenden Lage dargestellt sind,
- Figuren 3 bis 5: jeweils eine Ausgestaltungsmöglichkeit für ein Transportsicherungsmittel.

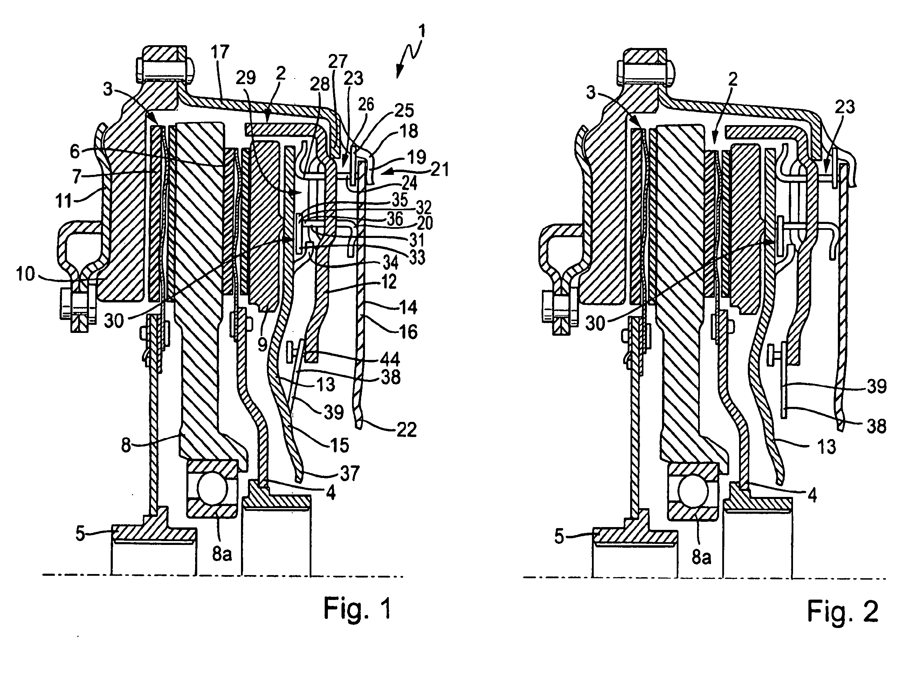

Das in Figur 1 dargestellte Kupplungsaggregat 1 umfasst zwei Reibungskupplungen 2, 3, wobei hier die Reibungskupplung 3 im ausgerückten, also voll geöffneten Zustand dargestellt ist und die Reibungskupplung 2 in einem zumindest teilweise in Schließrichtung betätigten Zustand.

Das Kupplungsaggregat bildet somit eine Doppelkupplung, die zwei Kupplungsscheiben 4, 5 umfasst, die mit unterschiedlichen Getriebeeingangswellen verbindbar sind, wobei das diese Wellen aufweisende Getriebe in vorteilhafter Weise ein so genanntes Lastschaltgetriebe bilden kann, welches zwei Teilgetriebe aufweisen kann,

Die Kupplungsscheiben 4, 5 tragen radial außen Reibbeläge 6, 7, die axial einspannbar sind zwischen einer den beiden Reibungskupplungen 2 und 3 gemeinsamen Gegendruckscheibe 8 und einer der jeweiligen Reibungskupplung 2 bzw. 3 zugeordneten Anpressplatte 9,10. Die Gegendruckscheibe 8 bildet ein Bestandteil eines Schwungrades, das mit einem Antriebsmotor verbunden ist. Die Gegendruckscheibe 8 ist über axial verlaufende Bereiche, die hier nicht näher dargestellt sind, mit einer Antriebsplatte bzw. einem Antriebskorb 11 verbunden. Die Antriebsplatte 11 ist als Mitnehmerring ausgebildet. Die axial verlaufenden Bereiche, die eine Verbindung zwischen der Gegendruckscheibe 8 und der Antriebsplatte 11 herstellen, können entweder an der Gegendruckscheibe 8 oder an der Antriebsplatte 11 angeformt sein oder aber auch an beiden Teilen 8, 11 zumindest teilweise vorgesehen sein. Die Antriebsplatte 11 kann entweder nach Art eines Drehmomentwandlers mit einer zum Beispiel an der Kurbelwelle des Antriebsmotors vorgesehenen Antriebsplatte verschraubbar sein oder aber mit einem motorseitig angeordneten Antriebselement über eine axiale Steckverbindung verbindbar sein. Bezüglich der Ausgestaltung derartiger Steckverbindungen wird beispielsweise auf die älteren Anmeldungen PCT/DE2006/000995, PCT/DE2006/001061, PCT/DE2006/001954, PCT/DE2006/001100 hingewiesen.

Die Gegendruckscheibe 8 kann über eine Lagerung 8a getriebeseitig gelagert und zumindest in einer Axialrichtung festgelegt sein, um die zumindest für eine der Reibungskupplungen erforderlichen Schließkräfte axial abzufangen. Bezüglich der Ausgestaltung und Anordnung einer derartigen Lagerung wird zum Beispiel auf die ältere Anmeldung DE 10 2005 037 514 hingewiesen. Die Gegendruckscheibe 8 kann also gemäß der Lehre dieser Schrift auf einer Getriebeeingangswelle gelagert bzw. axial abgestützt sein. Sie kann jedoch auch in Abwandlung dieser Lehre auf einem mit dem Getriebegehäuse fest verbundenen Abstützstutzen bzw. Abstützrohr aufgenommen und axial abgestützt sein.

Die vorerwähnten Anmeldungen sind bezüglich der erwähnten konstruktiven Merkmale als in die vorliegende Anmeldung integriert zu betrachten und es wird deshalb auf eine ausführliche Beschreibung dieser Merkmale verzichtet.

Wie aus Figur 1 erkennbar ist, besitzen die Kupplungsscheiben 4 und 5 axial zwischen ihren beiden ringförmigen Reibbelägen 6 und 7 eine so genannte Belagfederung, die einen progressiven Aufbau und Abbau des von den Reibungskupplungen 2, 3 übertragbaren Drehmomentes über zumindest einen Teilbereich des Betätigungsweges gewährleisten.

Die Anpressplatte 9 ist mittelbar oder unmittelbar vorzugsweise über blattfederartige Elemente mit der Gegendruckscheibe 8 drehfest, jedoch begrenzt axial verlagerbar verbunden. Die Anpressplatte 10 der Reibungskupplung 3 ist in ähnlicher Weise mit der Gegendruckscheibe 8 antriebsmäßig gekoppelt. An der Gegendruckscheibe 8 ist ein gehäuseartiges Bauteil 12 befestigt, das hier als Blechdeckel ausgebildet ist. Axial beidseits dieses Bauteiles 12 sind in ringförmiger Anordnung vorgesehene Hebelelemente 13, 14 vorgesehen, mittels derer die jeweils zugeordnete Reibungskupplung 2, 3 betätigbar ist.

Die Hebelelemente 13, 14 können jeweils ein ringartiges Bauteil bilden, das tellerfederähnliche Eigenschaften aufweist, also federnd in seiner Konizität veränderbar ist. Im Folgenden werden die zu einem ringartigen Bauteil zusammengefassten Hebelelemente 13, 14 als Hebelfeder 15 bzw. 16 bezeichnet. Diese Hebelfedem 15, 16 besitzen vorzugsweise jeweils eine Federeigenschaft, die gewährleistet, dass sich diese tendenzmäßig in eine kegelstumpfförmige Position aufstellen, die einem geöffneten Zustand der Reibungskupplungen 2 und 3 entspricht.

Die Anpressplatte 10 trägt Zugmittel 17, die sich axial erstrecken und an ihrem der Anpressplatte 10 abgewandten Ende 18, eine Schwenklagerung bzw. Abwälzauflage 19 tragen, an der die Hebelfeder 16 kippbar bzw. verschwenkbar abgestützt ist. Bei dem dargestellten Ausführungsbeispiel ist die Abwälzauflage 19 einstückig mit den Zugmitteln 17 ausgebildet und durch einen radial nach innen hin gerichteten ringförmigen Bereich gebildet.

Die Zugmittel 17 können durch einzelne über den Umfang verteilte hakenartige Bauteile gebildet sein. In vorteilhafter Weise können diese Zugmittel 17 jedoch auch zu einem vorzugsweise aus Blech hergestellten Bauteil zusammengefasst werden, welches einen vorzugsweise geschlossenen ringförmigen Bereich besitzt, von dem aus mehrere axiale Schenkel ausgehen können, die mit der Anpressplatte 10 fest verbunden sind.

Radial innerhalb der Abwälzauflage 19 ist die Hebelfeder 16 an einem ringförmigen Abstützring 20 abgestützt. Der ringförmige Abstützring 20 ist axial zwischen dem gehäuseartigen Bauteil 12 und der Hebelfeder 16 eingespannt und bildet ein Bestandteil einer Nachstelleinrichtung 21, mittels der zumindest der an den Reibbelägen 7 auftretende Verschleiß wenigstens teilweise automatisch ausgeglichen werden kann. Zum Schließen der Reibungskupplung 3 werden die radial inneren Spitzen 22 der Hebelfeder 16 in Richtung nach links beaufschlagt. Hierfür ist ein die Schließkraft zumindest im Wesentlichen in die Reibungskupplung 3 einleitendes Betätigungselement, wie zum Beispiel ein Betätigungslager vorgesehen, welches nicht näher dargestellt ist. Ein derartiges Betätigungselement bildet einen Bestandteil eines Betätigungssystems, welches als pneumatisches, hydraulisches, elektrisches oder mechanisch betätigtes Betätigungssystem ausgebildet sein kann oder aber eine Kombination der erwähnten Betätigungsmöglichkeiten aufweist, also beispielsweise als elektrohydraulisches Betätigungssystem ausgebildet ist.

Hebelelemente 13,14 bzw. Hebelfedern 15, 16 sind beispielsweise durch die DE 103 40 665 A1, die DE 199 05 373 A1, EP 0 992 700 B1 und EP 1 452 760 A1 vorgeschlagen worden.

Die die Drehmomentübertragung und die axiale Verlagerbarkeit der Anpressplatte 10 gewährleistenden Federmittel, wie insbesondere Blattfedern, die in an sich bekannter Weise die Bauteile 8 und 10 miteinander verbinden, besitzen vorzugsweise eine definierte axiale Vorspannung, die gewährleistet, dass die Anpressplatte 10 in Öffnungsrichtung der Reibungskupplung 3 beaufschlagt wird. Dies bedeutet, dass bei dem dargestellten Ausführungsbeispiel die Anpressplatte 10 axial in Richtung nach links von der Gegendruckscheibe 8 durch die erwähnten vorgespannten Blattfedern weggedrängt wird. Dadurch werden die Reibbeläge 7 freigegeben. Die Vorspannung der entsprechenden Federmittel, wie insbesondere Blattfedern, soll weiterhin gewährleisten, dass die Abwälzauflage 19 stets axial in Richtung der radial äußeren Bereiche der Hebelfeder 16 gedrängt wird.

Der Abstützring 20 bildet einen so genannten Verstellring 20, der über ein Rampensystem am gehäuseartigen Bauteil 12 axial abgestützt ist. Das Rampensystem besitzt in Umfangsrichtung verlaufende, sich in axialer Richtung erhebende Rampen. In bekannter Weise können entsprechende Rampen unmittelbar an dem Verstellring 20 angeformt sein und die mit diesen zusammenwirkenden Gegenrampen in vorteilhafter Weise unmittelbar im Bereich des Gehäusebodens des gehäuseartigen Bauteils 12 eingebracht sein. In Umfangsrichtung wird der Verstellring 20 von wenigstens einer nicht näher dargestellten Feder in Umfangsrichtung bzw. Nachstellrichtung beaufschlagt.

Einzelheiten bezüglich der Funktionsweise einer Nachstelleinrichtung, der Ausgestaltungsmöglichkeiten für Rampen und Gegenrampen sowie der Auslegung und Anordnung von Fedem, welche eine Nachstellung innerhalb eines Rampensystems ermöglichen, können aus der DE 42 39 291 A1, DE 42 39 289 A1, DE 43 22 677 A1 und DE 44 31 641 A1 oder der älteren Anmeldung DE 10 2006 054 624 entnommen werden.

Die Nachstelleinrichtung 21 umfasst weiterhin eine Sensoreinrichtung 23, die einen Sensorring 24 aufweist, der in ähnlicher Weise, wie dies in Zusammenhang mit dem Verstellring 20 beschrieben wurde, über ein Rampensystem am Gehäuseboden des gehäuseartigen Bauteils 12 abgestützt ist und in Nachstellrichtung durch eine Feder umfangsmäßig beaufschlagt wird. Der Sensorring 24 ist hier axial zwischen dem gehäuseartigen Bauteil 12 und den äußeren Bereichen der Hebelfeder 16 angeordnet, und zwar hier auf radialer Höhe der Abwälzauflage 19.

Die Sensoreinrichtung 23 besitzt weiterhin ein Sensorelement 25, das vorzugsweise axial federnde Bereiche besitzt. Das Sensorelement 25 klemmt, sofern kein Verschleiß aufgetreten ist, den Sensorring 24 axial ein, so dass dieser dann unverdrehbar gehaltert ist. Das Sensorelement 25 besitzt Anschlagbereiche 26, die mit vom Zugmittel getragenen Gegenanschlagbereichen 27 zusammenwirken können, und zwar insbesondere beim Auftreten von Verschleiß an den Reibbelägen 7. Die axiale Anordnung der Anschlagbereiche 26 und Gegenanschlagbereiche 27 sowie die zwischen diesen beim Betätigen der Reibungskupplung 3 auftretenden Axialwege sind derart aufeinander abgestimmt, dass bei einer Schließung der Reibungskupplung 3 und fehlendem Verschleiß maximal lediglich eine Berührung zwischen den Anschlagbereichen 26 und den Gegenanschlagbereichen 27 erfolgen kann. Sofern jedoch ein Verschleiß vorhanden ist, kommen die Anschlagbereiche 26 an den Gegenanschlagbereichen 27 zur Anlage bevor der vollständige Schließweg bzw. Einrückweg der Reibungskupplung 3 erreicht ist. Dadurch wird bewirkt, dass in Abhängigkeit des aufgetretenen Verschleißes eine axiale Verlagerung der Anschlagbereiche 26 gegenüber zumindest dem Sensorring 24 erfolgt. Diese axiale Verlagerung bewirkt, dass der Sensorring tendenzmäßig entlastet wird und somit sich verdrehen kann um einen Winkel, der abhängig ist von dem durch das Sensorelement 25 detektierten Verschleiß. Die dabei erfolgende axiale Verlagerung des Sensorringes 24 gegenüber dem gehäuseartigen Bauteil wird durch das zwischen dem Sensorring 24 und diesem gehäuseartigen Bauteil vorgesehene Rampensystem gewährleistet.

Beim Öffnen, also Ausrücken der Reibungskupplung 3, wird die Hebelfeder 16 in eine winkelmäßige Lage zurückgedrängt, bei der die Spitzen 22 der Hebelfeder 16 eine zumindest annähernd gleich bleibende bzw. konstante axiale Lage einnehmen. Aufgrund des mittels der Sensoreinrichtung 23 erfolgten Verschleißausgleiches, der hier eine entsprechende axiale Verlagerung der Abwälzauflage 19 nach rechts bewirkt, wird der Abstützring bzw. Verstellring 20 beim Öffnen der Reibungskupplung 3 entlastet, so dass auch dieser dann eine Verdrehung erfährt, die aufgrund des zwischen dem gehäuseartigen Bauteil 12 und dem Verstellring 20 vorhandenen Rampensystems eine entsprechende axiale Verlagerung des Verstellringes 20 bewirkt. Bezüglich weiterer Einzelheiten bzw. Funktionsmerkmale, die bei der Ausgestaltung der Reibungskupplung 3 zweckmäßig sein können, wird auf die ältere Anmeldung 10 2006 040 993.0 verwiesen.

Das die Anschlagbereiche 26 aufweisende Sensorelement kann durch ein ringförmiges Bauteil gebildet sein, das über den Umfang betrachtet einzelne, vorzugsweise gleichmäßig verteilte Befestigungen mit dem gehäuseartigen Bauteil 12 aufweist. Die zwischen diesen Befestigungen vorhandenen Bereiche des ringförmigen Sensorelementes 25 tragen die Anschlagbereiche 26. Die in Umfangsrichtung zwischen den Befestigungen vorgesehenen Bereiche des Sensorelementes 25 sind in axialer Richtung elastisch bzw. federnd verformbar. Für manche Anwendungsfälle kann es zweckmäßig sein, wenn diese Bereiche auch einer Torsionsbeanspruchung ausgesetzt werden, die zumindest ein geringfügiges Verdrillen zumindest der seitlich der Anschlagbereiche 26 sich umfangsmäßig erstreckenden Bereiche mit geringerer radialer Breite bewirken.

Die Hebelfeder 15 der Reibungskupplung 2 ist gegenüber der Hebelfeder 16 axial auf der anderen Seite der radialen Bereiche des gehäuseartigen Bauteils 12 vorgesehen. Die Hebelfeder 16 stützt sich mit einem radial äußeren Bereich an einem Abstützring bzw. Verstellring 28 ab. Der Verstellring 28 ist in ähnlicher Weise wie dies in Zusammenhang mit dem Verstellring 20 beschrieben wurde, gegenüber dem gehäuseartigen Bauteil 12 verdrehbar und an diesem über ein Rampensystem axial abgestützt. Der Verstellring 28 bildet einen Bestandteil einer Nachstelleinrichtung 29, die zwischen den radialen Bereichen des gehäuseartigen Bauteils 12 und der Hebelfeder 15 wirksam ist. Zwischen der Anpressplatte 9 und der Gegendruckscheibe 8 und/oder dem gehäuseartigen Bauteil 12 sind Drehmomentübertragungsmittel vorgesehen, die vorzugsweise durch an sich bekannte Blattfedern gebildet sind, welche axial derart vorgespannt sind, dass die Anpressplatte 9 axial gegen die Hebelfeder 15 gedrückt wird. Die axiale Gesamtkraft, welche auf die Hebelfeder 15 in Richtung nach rechts einwirkt, ist dabei derart bemessen, dass während des Betriebes des Kupplungsaggregates 1 eine axiale Verlagerung bzw. Verschwenkung der Hebelfeder 16 aufgrund zumindest von Resonanzerscheinungen und/oder Axialschwingungen bzw. Taumelschwingungen von zumindest einzelnen Bauteilen des Kupplungsaggregates verhindert wird. Eventuell können zusätzlich zu den Blattfederelementen weitere Energiespeicher bzw. Federelemente vorgesehen werden, die auf die Anpressplatte 9 oder aber unmittelbar auf die Hebelfeder 15 einwirken.

Die Nachstelleinrichtung 29 umfasst weiterhin eine Sensoreinrichtung 30, die radial innerhalb und hier beabstandet von dem Verstellring 28 angeordnet ist. Die Sensoreinrichtung 30 umfasst einen Sensorring 31, der ähnlich wie der Sensorring 24 gegenüber dem gehäuseartigen Bauteil 12 verdrehbar und über ein Rampensystem abgestützt ist. Weiterhin besitzt die Sensoreinrichtung 30 ein Sensorelement 32, das entweder mittelbar oder unmittelbar vom gehäuseartigen Bauteil 12 getragen wird. Das Sensorelement 32 besitzt zumindest einen, vorzugsweise mehrere über den Umfang verteilte Anschlagbereiche 33, die mit Gegenanschlagbereichen 34 zumindest beim Auftreten von Verschleiß an den Reibbelägen 6 der Kupplungsscheibe 4 zusammenwirken. Die Gegenanschlagbereiche 34 können durch Elemente gebildet sein, die mit der Hebelfeder 15 verbunden sind. Besonders vorteilhaft ist es, wenn diese Gegenanschlagbereiche 34 durch einstückig mit der Hebelfeder 15 ausgebildete Zungen gebildet sind. Das Sensorelement 32 besitzt Bereiche 35, die mit axialer Vorspannung an Bereichen 36 des Sensorringes 31 zusammenwirken. Durch die axiale Vorspannung zumindest der Bereiche 35 wird der Sensorring 31 axial eingespannt, so dass eine Verdrehung desselben zumindest bei fehlendem Verschleiß an den Reibbelägen 6 vermieden wird. Dadurch wird eine unkontrollierte, nicht auf einen Verschleiß zurückzuführende Nachstellung der Nachstelleinrichtung 29 vermieden.

Das Sensorelement 32 kann ebenfalls durch ein ringförmiges Bauteil gebildet sein, das ähnlich ausgebildet mit dem gehäuseartigen Bauteil 12 verbunden und wirksam ist, wie dies in Zusammenhang mit dem Sensorelement 25 beschrieben wurde.

Der aus Figur 1 ersichtliche axiale Abstand zwischen den Anschlagbereichen 33 und den Gegenanschlagbereichen 34 ist derart bemessen, dass bei voll geschlossener Reibungskupplung 2 und fehlendem Verschleiß an den Reibbelägen 6 lediglich ein Touchieren bzw. leichte Anlage zwischen diesen Bereichen 33 und 34 erfolgt, wodurch gewährleistet ist, dass der Sensorring 31 gegen Rotation blockiert bleibt. Das Schließen der Reibungskupplung 2 erfolgt in ähnlicher Weise wie dies in Verbindung mit der Reibungskupplung 3 beschrieben wurde. Es wird mittels einer Betätigungseinrichtung eine Schließkraft im Bereich der Spitzen 37 der Hebelfeder 15 eingeleitet. Diese Schließkraft wird allmählich aufgebaut, und zwar so lange, bis die auf die Anpressplatte 9 ausgeübte Axialkraft ausreicht, um das vom Motor abgegebene Drehmoment über die Kupplungsscheibe 4 an das Getriebe weiterzuleiten. Die maximale Anpresskraft kann dabei zumindest einen konstanten Wert aufweisen. Es kann jedoch auch vorteilhaft sein, in Abhängigkeit des Betriebszustandes des Motors und des dabei abgegebenen Drehmomentes diese Schließkraft entsprechend anzupassen. Dies bedeutet, dass, wenn der Motor lediglich 50 % seines Nominaldrehmomentes abgibt, die Anpresskraft entsprechend reduziert werden kann.

Eine ähnliche Betätigung ist auch für die Reibungskupplung 3 möglich.

Über den normalen Betätigungsweg der Reibungskupplungen 2, 3 muss stets gewährleistet sein, dass die entsprechende Hebelfeder 15, 16 an dem zugeordneten Verstellring 28, 20 angefedert bleibt, um ein Abheben von diesem Verstellring 28, 20 zu verhindern, da ansonsten eine unkontrollierte, nicht auf einen Verschleiß zurückzuführende Nachstellung erfolgen würde. Die vorerwähnte Anfederung kann, wie bereits erwähnt, mittels der auf die Anpressplatten 9, 10 axial einwirkenden Blattfederelemente, die gleichzeitig die Drehmomentübertragung gewährleisten, erfolgen. Es können jedoch auch andere bzw. zusätzliche Federelemente vorgesehen werden, die entweder mittelbar oder unmittelbar eine entsprechende Axialkraft auf die Hebelfedem 15, 16 ausüben.

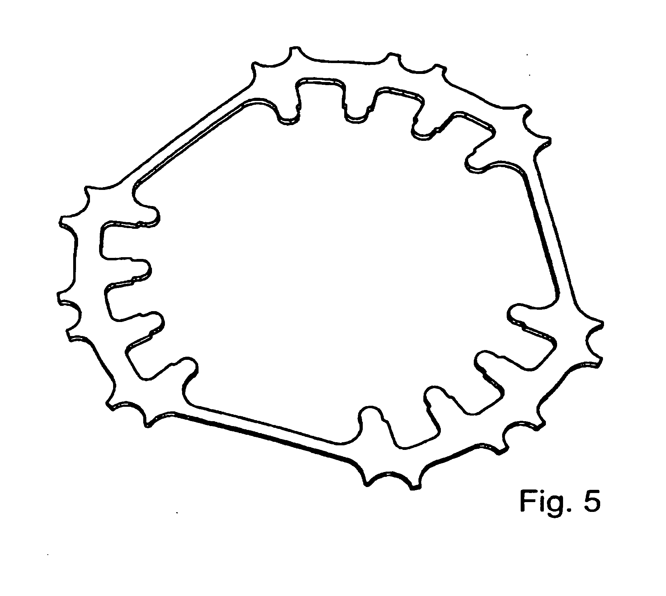

Vorteilhaft kann es jedoch auch sein, wenn die einander zugeordneten Verstellringe und Sensorringe, also 20 und 24 für die Reibungskupplung 3 und 28, 31 für die Reibungskupplung 2 wirkungsmäßig miteinander gekoppelt sind, und zwar derart, dass die entsprechenden Verstellringe 20, 28 lediglich eine Verdrehung bzw. eine axiale Bewegung ausführen können, die unmittelbar abhängig ist von einer Verdrehung bzw. einer axialen Bewegung der Sensorringe 24, 31. Hierfür können zwischen den einander zugeordneten Ringen, nämlich 20 und 24 sowie 28 und 31, Anschläge, zum Beispiel Drehanschläge oder Axialanschläge, vorgesehen werden, die gewährleisten, dass die Nachstellbewegungen der Sensorringe 24, 31 die Verschleißausgleichsbewegungen der Nachstellringe 21, 29 bestimmen. Anregungen für derartige konstruktive Ausgestaltungen können aus der DE 43 42 390 A1 und der DE 195 10 905 A1, insbesondere deren Figuren 5 bis 8 entnommen werden. Durch eine derartige Koppelung wird auch die Möglichkeit eröffnet, die einander zugeordneten Verstellringe und Sensorringe mit Rampensystemen unterschiedlicher Steigung zu versehen. Dadurch können die einander zugeordneten Ringe, obwohl sie die gleiche Verdrehung zum Nachstellen erfahren, unterschiedliche Axialwege zurücklegen. Die Größe des Unterschiedes dieser Wege kann auch durch entsprechende Bemessung des radialen Abstandes zwischen den einander zugeordneten Verstellringen und Sensorringen beeinflusst werden. Dadurch wird die Möglichkeit eröffnet, über die Lebensdauer der Reibungskupplung, also in Abhängigkeit des auftretenden Verschleißes, eine Veränderung der winkelmäßigen Einbaulage der Hebelfedern zu erzielen. So kann beispielsweise das entsprechende Gesamtnachstellsystem derart ausgebildet werden, dass die Spitzen 22, 37 der Hebelfedern 15, 16 über die Lebensdauer der Reibungskupplungen 2, 3 praktisch eine gleich bleibende axiale Position im voll eingerückten und/oder im voll ausgerückten Zustand beibehalten, obwohl die radial äußeren Bereiche der Hebelfedern 15, 16 eine axiale Verlagerung aufgrund des auftretenden Verschleißes erfahren.

Um zu gewährleisten, dass während des Transportes des Kupplungsaggregates vom Hersteller bis zum Montagevorgang an den Motor beim Automobilhersteller keine unbeabsichtigte Verstellung zumindest innerhalb der Nachstelleinrichtungen 29 auftreten, ist zumindest ein Transportsicherungsmittel 38vorgesehen, das in Figur 1 in einer verriegelten und in Figur 2 in einer entriegelten Lage dargestellt ist. Unter entriegelter Lage ist diejenige Lage zu verstehen, welche das Transportsicherungsmittel 38 einnimmt, nachdem das Kupplungsaggregat 1 an der Abtriebswelle einer Brennkraftmaschine bzw. eines Motors montiert wurde und zumindest eine erste Betätigung, vorzugsweise nachdem zumindest Motor und Getriebe verbunden wurden, erfolgt ist. Obwohl es zweckmäßig sein kann, derartige Transportsicherungsmittel auch über manuelle Mittel zu entriegeln, ist es besonders vorteilhaft, wenn diese selbsttätig die Entriegelung gewährleisten. Dies kann beispielsweise aufgrund von Eigenelastizitäten von Bauteilen erfolgen. Es wird also das Transportsicherungsmittel 38 bei der Montage des Kupplungsaggregates 1 mittels eines Werkzeuges in einer verspannten Stellung montiert, so dass durch Betätigung der entsprechenden Reibungskupplung eine Entlastung des Transportsicherungsmittels 38 erfolgen kann. Das Transportsicherungsmittel 38 kann sich dann elastisch entspannen und dadurch zumindest die zunächst blockierte Nachstelleinrichtung 29 freigeben.

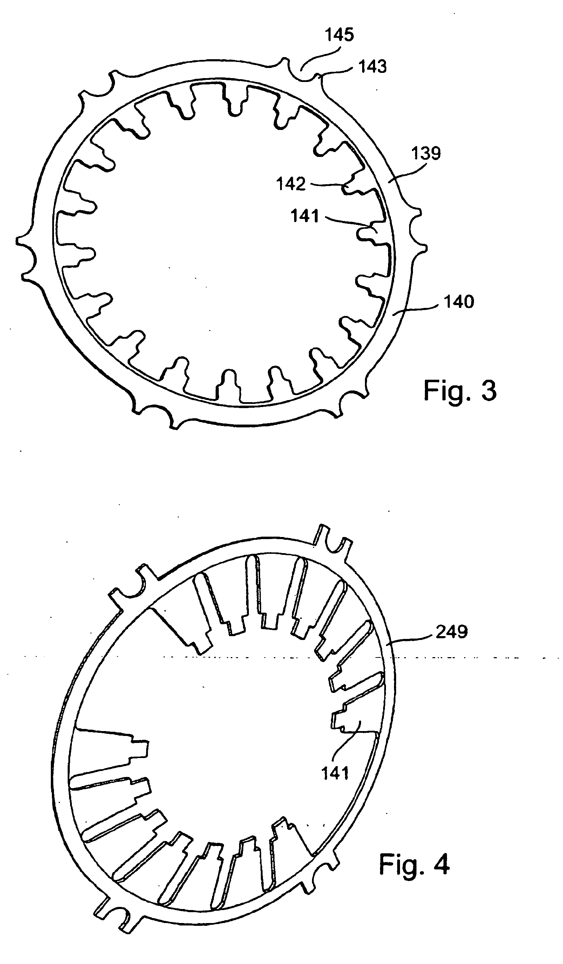

Das Transportsicherungsmittel 38 ist durch ein ringförmiges axial federndes Element 39 gebildet, das entsprechend den Figuren 3 und 4 ausgestaltet sein kann. Das ringförmige Element 39 befindet sich bei der in Figur 1 dargestellten Einbaulage in einem axial elastisch verspannten Zustand. Das ringförmige Element 39 ist zwischen Bereichen des Gehäuses 12 und zumindest einzelnen über den Umfang verteilten Hebeln des Hebelelementes 13 funktionsmäßig derart wirksam, dass die durch die Hebelelemente 13 gebildete Hebelfeder 15 in einer vorbestimmten verschwenkten Position innerhalb des nicht montierten Kupplungsaggregates 1 gehalten ist. Diese Position der Hebelelemente 13 gewährleistet, dass während der Handhabung bzw. während des Transports des nicht montierten Kupplungsaggregates 1 keine unbeabsichtigte Nachstellung durch die Nachstelleinrichtung 29 erfolgt. Das ringförmige federnde Element 39 ist vorzugsweise tellerfederartig ausgebildet.

Bei der in Figur 1 dargestellten verspannten Lage des ringförmigen Elementes 39 stützt sich dieses radial außen einerseits axial am Gehäuse 12 und radial innen andererseits an Hebelelementen 13 axial und/order radial ab. Bei einer Ausgestaltung gemäß Figur 1 erfolgt die Abstützung zumindest zwischen dem ringförmigen Elementen 39 und einer Mehrzahl von Hebelelementen 13 der Hebelfeder 15 derart, dass die zwischen den entsprechenden Hebelelementen 13 und dem ringförmigen Elementen 39 auftretenden Abstützkräfte sowohl eine axiale als auch eine radiale Kraftkomponente auf das ringförmige Element 39 bewirken.

Nachdem das Kupplungsaggregat 1 nach Zusammenbau von Motor und Getriebe antriebsmäßig mit der Abtriebswelle des Motors verbunden ist, kann durch Beaufschlagung der Spitzen 37 der Hebelelemente 13 die Kupplung 2 in Schließrichtung durch ein entsprechendes Betätigungssystem beaufschlagt werden. Diese Beaufschlagung bewirkt das die Abstützung bzw. Verspannung zwischen dem ringförmigen Element 39 und den mit diesem zusammen wirkenden Hebelelementen 13 aufgehoben wird. Aufgrund der dadurch erzeugten Entlastung des ringförmigen federnden Elementes 39, kann letzteres in eine vorbestimmte Lage, welche in Figur 2 dargestellt ist, zurückfedern. Dadurch wird die volle Funktionsfähigkeit der Reibungskupplung 2 freigegeben, wodurch auch die Nachstelleinrichtung 29 die ihr zugedachte Funktion übernehmen kann.

Das in Figur 3 dargestellte, ringförmige und axial federnde Element 139 ist tellerfederartig ausgebildet. Das tellerfederartige Element 139 besitzt einen ringartigen federnden Grundkörper 140, von dem aus radial nach innen gerichtete Ausleger 141 ausgehen. Diese Ausleger 141 bilden Abstützbereiche 142, die mit entsprechend angepassten Gegenabstützbereichen an zumindest einzelnen Hebelelementen zusammen wirken können, um die vorbeschriebenen Transportsicherungsmittel zu bilden. Bei dem in Figur 3 dargestellten tellerfederartigen Element 139, sind die Abstützbereiche 142 praktisch gleichmäßig über den Umfang verteilt. Die Ausleger 141 bzw. Abstützbereiche 142 sind vorzugsweise derart ausgestaltet, dass sie in Umfangsrichtung betrachtet, jeweils zwischen zwei umfangsmäßig benachbarten Hebelelementen 13 zu liegen kommen. Die Abstützbereiche 142 und die an den entsprechenden Hebelelementen vorgesehenen Gegenabstützbereichen können dabei derart aufeinander abgestimmt sein, dass jeweils ein Abstützbereich 142 nur mit einem Hebelelement zusammen wirkt, oder aber mit zwei benachbarten Hebelelementen zusammen wirkt.

Radial außen besitzt das tellerfederartige Element 139 Anformungen 143, welche ebenfalls Ausleger bilden. Diese Anformungen 143 dienen zur Drehsicherung des Elementes gegenüber dem Gehäuse 12. Hierfür sind am Gehäuse 12, wie in Figur 1 schematisch dargestellt, Positionierbereiche 44 vorgesehen, welche mit den Auslegern 143 zusammen wirken. Diese Positionierbereiche 44 können beispielsweise durch axiale Vorsprünge gebildet sein, die einteilig mit dem Gehäuse 12 ausgebildet sein können. Die Positionierbereiche 44 können jedoch auch durch mit dem Gehäuse 12 verbundene zusätzliche Bauteile, wie z. B. Bolzen gebildet sein. Der artige Positionierbereiche können dann axial in einen Ausschnitt 145 der Ausleger 143 eingreifen. Die Positionierbereiche bzw. Positioniermittel 44 sind vorzugsweise derart ausgestaltet, dass sie auch eine axiale Sicherung des entsprechenden, zumindest teilweise entspannten, tellerfederartigen Elementes 39 bzw. 139 innerhalb des Kupplungsaggregates 1 gewährleisten.

In Figur 4 ist eine alternative Ausgestaltungsmöglichkeit eines tellerfederartigen Elementes 249 dargestellt. Das tellerfederartige Element 249 unterscheidet sich gegenüber dem tellerfederartigen Element 139 im Wesentlichen dadurch, dass die radial nach innen reichenden Ausleger 141 eine andere umfangsmäßige Verleihung aufweisen.

Figur 5 zeigt eine weitere partiell dargestellte Ausgestaltungsmöglichkeit eines Transportsicherungsmittels.

### Bezugszeichenliste

| | | | |
|---|---|---|---|
| 1 | Kupplungsaggregat | 26 | Anschlagbereich |
| 2, 3 | Reibungskupplung | 27 | Gegenanschlagbereich |
| 4, 5 | Kupplungsscheibe | 28 | Verstellring |
| 6, 7 | Reibbeläge | 29 | Nachstelleinrichtung |
| 8 | Gegendruckscheibe | 30 | Sensoreinrichtung |
| 8a | Lagerung | 31 | Sensorring |
| 9, 10 | Anpressplatte | 32 | Sensorelement |
| 11 | Antriebskorb | 33 | Anschlagbereich |
| 12 | gehäuseartiges Bauteil | 34 | Gegenanschlagbereich |
| 13, 14 | Hebelelement | 35, 36 | Bereiche |
| 15, 16 | Hebelfeder | 37 | Spitzen |
| 17 | Zugmittel | 38 | Transportsicherungsmittel |
| 18 | abgewandtes Ende | 39 | ringförmiges Element |
| 19 | Abwälzauflage | 44 | Positionierungsbereich |
| 20 | Abstütz- /Verstellring | 139 | ringförmiges Element |
| 21 | Nachstelleinrichtung | 140 | Grundkörper |
| 22 | Spitzen | 141 | Ausleger |
| 23 | Sensoreinrichtung | 142 | Abstützbereich |
| 24 | Sensorring | 143 | Anformung |
| 25 | Sensorelement | 145 | Ausschnitt |
| | | 249 | tellerfederartiges Element |
| | | | |

## Patentansprüche

1. Kupplungsaggregat (1) mit wenigstens einer Reibungskupplung (2, 3), bestehend aus wenigstens einer Anpressplatte (9,10), die drehfest, jedoch axial begrenzt verlagerbar mit einem Gehäuse (12) verbunden ist, wobei das Gehäuse (12) mit einer Gegendruckscheibe (8) verbindbar ist und zwischen Gehäuse (12) und Anpressplatte (9, 10) in ringförmiger Anordnung vorgesehene Hebelelemente (13, 14) angeordnet sind, die an einer vom Gehäuse (12) getragenen Abwälzauflage (19) verschwenkbar abgestützt sind, wobei zwischen den Hebelelementen (13, 14) und dem Gehäuse (12) oder zwischen den Hebelelementen (13, 14) und der Anpressplatte eine automatische Nachstelleinrichtung (21) wirksam ist, die zumindest eine partielle Kompensation des wenigstens an den Reibbelägen (6, 7) einer zwischen der Anpressplatte (9, 10) und der Gegendruckscheibe (8) einspannbaren Kupplungsscheibe (4, 5) auftretenden Verschleißes bewirkt, wobei in dem Kupplungsaggregat Transportsicherungsmittel (38) integriert sind, die eine Blockierung der Nachstelleinrichtung (21) bewirken und die zumindest beim erstmaligen Betätigen der Reibungskupplung im in einem Fahrzeug eingebauten Zustand selbsttätig eine Lage einnehmen, die die Nachstellfunktion der Nachstelleinrichtung (21) freigibt, **dadurch gekennzeichnet, dass** die Transportsicherungsmittel (38) durch wenigstens ein ringförmiges, axial federndes Element (39) gebildet sind, welches funktionsmäßig zwischen dem Gehäuse (12) und den Hebelelementen (13, 14) wirksam ist und zur Gewährleistung der Transportsicherungsmittelfunktion in einem elastisch verspannten Zustand befindet, der gewährleistet, dass die Hebelelemente in einer vorbestimmten verschwenkten Position innerhalb des nicht montierten Kupplungsaggregates gehalten werden.

2. Kupplungsaggregat nach Anspruch 1, **dadurch gekennzeichnet, dass** das ringförmige Element (39) tellerfederartig ausgebildet ist und einerseits axial am Gehäuse und andererseits an zumindest einzelnen der Hebelelemente abgestützt ist.

3. Kupplungsaggregat nach Anspruch 1 oder 2, **dadurch gekennzeichnet, dass** das ringförmige Element (39) einen ringartigen, federnden Grundkörper aufweist, von dem aus zumindest radial nach innen gerichtete Ausleger (141) ausgehen, welche Abstützbereiche (142) bilden, die mit an zumindest einzelnen Hebelelementen vorgesehenen Gegenabstützbereichen zur Bildung der Transportsicherungsmittel zusammenwirken.

4. Kupplungsaggregat nach einem der Ansprüche 1 bis 3, **dadurch gekennzeichnet, dass** das ringförmige Element am Gehäuse umfangsmäßig positioniert ist.

5. Kupplungsaggregat nach einem der Ansprüche 1 bis 4, **dadurch gekennzeichnet, dass** das ringförmige Element am Außenrand radiale Ausleger angeformt hat, die zur Drehsicherung des Elementes gegenüber dem Gehäuse dienen.

## Claims

1. Clutch assembly (1) having at least one friction clutch (2, 3), composed of at least one pressure plate (9, 10) which is connected to a housing (12) so as to rotate conjointly therewith but so as to be axially movable to a limited extent, wherein the housing (12) can be connected to a thrust disc (8) and lever elements (13, 14) provided in an annular arrangement are arranged between the housing (12) and pressure plate (9, 10), which lever elements are pivotably supported on a rolling support (19) borne by the housing (12), wherein an automatic adjustment device (21) acts between the lever elements (13, 14) and the housing (12) or between the lever elements (13, 14) and the pressure plate, which adjustment device effects at least a partial compensation of the wear occurring on the friction linings (6, 7) of a clutch disc (4, 5) that can be clamped between the pressure plate (9, 10) and the thrust disc (8), wherein transport lock means (38) are integrated in the clutch assembly, which transport lock means effect a blocking of the adjustment device (21) and, at least upon the first actuation of the friction clutch when the latter is in the installed state in a vehicle, assume a position which enables the adjustment function of the adjustment device (21), **characterized in that** the transport lock means (38) are formed by at least one annular, axially resilient element (39) which functionally acts between the housing (12) and the lever elements (13, 14) and which, in order to ensure the transport lock means function, is in an elastically braced state which ensures that the lever elements are held in a predetermined pivoted position within the non-mounted clutch assembly.

2. Clutch assembly according to Claim 1, **characterized in that** the annular element (39) is formed in the manner of a plate spring and is supported at one side axially against the housing and at the other side against at least some of the lever elements.

3. Clutch assembly according to Claim 1 or 2, **characterized in that** the annular element (39) has an annular, resilient basic body from which extend at least radially inwardly directed arms (141) which form support regions (142) which, to form the transport lock means, interact with counterpart support regions provided on at least some lever elements.

4. Clutch assembly according to one of Claims 1 to 3, **characterized in that** the annular element is positioned peripherally on the housing.

5. Clutch assembly according to one of Claims 1 to 4, **characterized in that** the annular element has integrally formed on the outer edge radial arms which serve for rotationally locking the element with respect to the housing.

## Revendications

1. Ensemble d'embrayage (1) comprenant au moins un embrayage à friction (2, 3), constitué d'au moins une plaque de pressage (9, 10) qui est connectée de manière solidaire en rotation, mais déplaçable de manière limitée axialement, à un boîtier (12), le boîtier (12) pouvant être connecté à un disque de contre-pression (8) et des éléments de levier (13, 14) prévus suivant un agencement annulaire étant disposés entre le boîtier (12) et la plaque de pressage (9, 10), lesquels éléments de levier sont supportés de manière pivotante sur un appui roulant (19) porté par le boîtier (12), entre les éléments de levier (13, 14) et le boîtier (12) ou entre les éléments de levier (13, 14) et la plaque de pressage agissant un dispositif de réglage automatique (21), qui provoque au moins une compensation partielle de l'usure se produisant au moins au niveau des garnitures de friction (6, 7) d'un disque d'embrayage (4, 5) pouvant être serré entre la plaque de pressage (9, 10) et le disque de contre-pression (8), des moyens de fixation pour le transport (38) étant intégrés dans l'ensemble d'embrayage, lesquels provoquent un blocage du dispositif de réglage (21) et adoptent automatiquement, au moins lors du premier actionnement de l'embrayage à friction dans l'état installé dans un véhicule, une position qui libère la fonction de réglage du dispositif de réglage (21), **caractérisé en ce que** les moyens de fixation pour le transport (38) sont formés par au moins un élément annulaire (39) élastique axialement, qui agit fonctionnellement entre le boîtier (12) et les éléments de levier (13, 14), et qui se trouve, en vue de garantir la fonction des moyens de fixation pour le transport, dans un état serré élastiquement qui garantit que les éléments de levier sont maintenus dans une position pivotée prédéterminée à l'intérieur de l'ensemble d'embrayage non monté.

2. Ensemble d'embrayage selon la revendication 1, **caractérisé en ce que** l'élément annulaire (39) est réalisé en forme de ressort Belleville et est supporté d'une part axialement sur le boîtier et d'autre part sur au moins certains des éléments de levier.

3. Ensemble d'embrayage selon la revendication 1 ou 2, **caractérisé en ce que** l'élément annulaire (39) présente un corps de base élastique annulaire, duquel partent des bras (141) orientés au moins radialement vers l'intérieur, qui forment des régions de support (142) qui coopèrent avec des régions de support conjuguées prévues sur au moins certains éléments de levier, pour former les moyens de fixation pour le transport.

4. Ensemble d'embrayage selon l'une quelconque des revendications 1 à 3, **caractérisé en ce que** l'élément annulaire est positionné sur la périphérie du boîtier.

5. Ensemble d'embrayage selon l'une quelconque des revendications 1 à 4, **caractérisé en ce que** l'élément annulaire présente des bras façonnés radiaux sur le bord extérieur, lesquels servent à la fixation en rotation de l'élément par rapport au boîtier.
